# EUROPEAN PATENT SPECIFICATION

(11) **EP 1 716 030 B1**
(45) Date of publication and mention of the grant of the patent: **11.05.2011**
(21) Application number: 05711062.9
(22) Date of filing: 15.02.2005
(51) Int. Cl.: B60T 10/02, B60T 1/087

(54) **ARRANGEMENT AND METHOD FOR CONTROLLING THE ACTIVATION OF AN AUXILIARY BRAKE IN A VEHICLE**
ANORDNUNG UND VERFAHREN ZUR STEUERUNG DER AKTIVIERUNG EINER HILFSBREMSE IN EINEM FAHRZEUG
PROCEDE ET DISPOSITIF POUR COMMANDER L'ACTIVATION D'UN FREIN AUXILIAIRE D'AUTOMOBILE

(30) Priority: 19.02.2004 SE 0400382
(43) Date of publication of application: 02.11.2006
(73) Proprietor: Scania CV AB (publ), 151 87 Södertälje (SE)
(72) Inventor: RICKMAN, Johnny, S-151 38 Södertälje (SE); SELLING, Tomas, S-123 59 Farsta (SE)
(86) International application number: PCT/SE2005/000202
(87) International publication number: WO 2005/080165

(56) References cited:
- EP-A1- 1 176 073
- EP-A1- 1 380 485
- EP-A2- 0 873 925

## Description

### BACKGROUND TO THE INVENTION, AND STATE OF THE ART

The present invention relates to an arrangement and a method for controlling the activation of an auxiliary brake of a vehicle according to the preambles of claims 1 and 9.

In many situations, auxiliary brakes are used for braking a heavy motor vehicle, thereby reducing wear on its ordinary wheelbrakes. The usual type of such an auxiliary brake is a hydrodynamic retarder, which can with advantage be used for braking the vehicle over long periods, e.g. when the vehicle is on downhill runs. The retarder is connected to the vehicle's driveline and therefore brakes the vehicle's powered wheels. A hydrodynamic retarder comprises a stator, a rotor and a circulating oil which flows at high velocity between the stator and the rotor in a toroidal space. During the braking process, the kinetic energy of the oil converts to thermal energy. In many cases, the means used for cooling the oil during the braking process is the cooling system for cooling the vehicle's engine. This entails the cooling system being provided with an extra heat exchanger whereby the coolant of the cooling system cools the hot oil leaving the retarder. However, cooling the oil of the retarder often involves a greater cooling effect than cooling the vehicle's engine. To avoid overheating of the cooling system, the retarder's braking effect is reduced when the temperature of the coolant rises above a reference temperature. A temperature sensor is arranged in the cooling system to detect the temperature of the coolant leaving the heat exchanger. When the retarder is activated, the oil is cooled by the coolant in the heat exchanger. The coolant thereby acquires a raised temperature which is partly cooled away in the radiator, but the coolant will still be at a somewhat higher temperature when it is led back into the heat exchanger after circulating once through the cooling system. The coolant leaving the heat exchanger will thus also assume a corresponding higher temperature if the braking effect remains unchanged. A problem in this respect is that the control system intended to protect the cooling system from overheating makes no distinction between whether high temperature of the coolant leaving the heat exchanger is due to greater braking effect or to raised temperature of the coolant entering the heat exchanger. In either case the control system reduces the retarder's braking effect in order to lower the temperature of the coolant. In cases where high temperature of the coolant leaving the heat exchanger is due to raised temperature of the cooling medium entering the heat exchanger, reduction of the retarder's braking effect is usually totally unjustified. In such cases the cooling system is able to cool the retarder without being overloaded. Such reduction of the retarder's braking effect results in the use of the retarder not being optimum with respect to the cooling capacity of the cooling system during a period of retarder activation time.

DE 197 16 919 and DE 100 09 959 refer to methods for controlling a hydrodynamic retarder during a vehicle's braking process. The cooling system which cools the vehicle's engine is used for cooling the hydrodynamic retarder. When the retarder is activated, the temperature of the coolant of the cooling system is measured before and after the cooling of the retarder. The cooling effect available to the retarder from the circulating coolant of the cooling system can thus be determined substantially instantaneously on the basis of information about, inter alia, this temperature difference. In this situation the retarder's braking effect is regulated as a function of the available cooling effect of the cooling system. The retarder can thus be controlled so that it provides, when necessary, a substantially optimum braking effect without the cooling system being overloaded.

EP-A-873925 discloses an arrangement according to the preamble of claim 1 and a method according to the preamble of claim 9, in which the temperature of the cooling medium leaving the auxiliary brake is compared with a reference temperature. If the temperature exceeds the reference temperature, the braking effect of the auxiliary brake is reduced. The reference temperature is not a constant value, but varies in time.

### SUMMARY OF THE INVENTION

The object of the present invention is to provide an arrangement and a method whereby the auxiliary brake is only controlled on the basis of information about the temperature of the cooling medium after the latter has cooled the auxiliary brake, and whereby substantially optimum use of the auxiliary brake is possible for the whole activation time of the auxiliary brake.

The object stated above is achieved with the arrangement mentioned in the introduction which is characterised by what is indicated in the characterising part of claim 1. The use of auxiliary brakes is particularly appropriate in cases where vehicles have to be braked over long periods, such as when travelling on downhill runs. Activation of an auxiliary brake for a long period results in raised temperature of the cooling medium which is intended to cool the auxiliary brake, after it has circulated once through the cooling system. The cooling medium thus also assumes a raised temperature after it has cooled the auxiliary brake. This increase in the temperature of the cooling medium after the cooling of the auxiliary brake is thus due not to the auxiliary brake providing an increased braking effect but to the cooling medium used for cooling the auxiliary brake being at a higher temperature before it cools the auxiliary brake. In many cases this temperature rise leads to a temperature of the cooling medium which is higher than the reference temperature. The control system therefore reduces the auxiliary brake's braking effect in order to lower the temperature of the cooling medium. In the majority of cases this lowering of the braking effect is unjustified. Knowledge of the time which the cooling medium takes to circulate once through the cooling system can be used to provide, during the period of time when the heated cooling medium reaches the auxiliary brake after circulating once through the cooling system, a reference temperature which varies with time. A suitably varying reference temperature within said period of time makes it possible to at least reduce the impact of the suddenly raised temperature of the cooling medium. The unjustified reduction in the auxiliary brake's braking effect which occurs when a conventional cooling system is used can thus be counteracted to enable substantially optimum use of the auxiliary brake for the whole activation time.

According to an embodiment of the present invention, the reference temperature increases continuously with time within said period of time. When the temperature of the cooling medium rises above the reference temperature, the auxiliary brake's braking effect is reduced with the object of bringing the temperature of the cooling medium down to the reference temperature. As lowering the temperature of the cooling medium takes a certain time, a reference temperature which increases with time results in there being no need for the temperature of the cooling medium to be lowered as much as in cases where the reference temperature is constant. The auxiliary brake's braking effect therefore need not be reduced as much as in the conventional case. The reference temperature may increase in a linear manner within said period of time. In many cases, such an increase in the reference temperature is sufficient for effectively alleviating said unjustified reduction of the auxiliary brake's braking capacity. With a more refined model, the reference temperature may exhibit, within said period of time, a variation with time which comprises a rise corresponding to the expected rise in the temperature of the cooling medium which occurs when the cooling medium has circulated approximately once through the cooling system since the auxiliary brake was activated. The impact of the suddenly raised temperature of the cooling medium entering the heat exchanger can thus be substantially totally eliminated. Such a refined model may be based on temperature values of the cooling medium measured at a suitable point in the cooling system before the cooling medium reaches the auxiliary brake.

According to another embodiment of the present invention, the reference temperature has a substantially constant temperature value during an initial time segment after activation of the auxiliary brake. The initially constant reference temperature needs to be set at a lower temperature value than the conventional constant reference temperature in order to allow the later increase in the reference temperature during the subsequent period of time. The period of time with a varying reference temperature may commence when the temperature of the cooling medium rises above the initially constant reference temperature. Once the temperature of the cooling medium rises above the reference temperature, the reference temperature assumes a temperature value which increases with time. As the reference temperature increases during said period of time, only a small reduction in the auxiliary brake's braking effect is required, in the majority of cases, to cause the temperature of the cooling medium to drop to the reference temperature.

According to another embodiment of the present invention, the reference temperature has a substantially constant temperature value during the time segment which follows the period of time with the varying reference temperature. When the cooling medium has circulated once through the cooling system since activation of the auxiliary brake, the temperature of the cooling medium stabilises and continuing control of the auxiliary brake with a constant reference temperature is usually feasible without complications. Said period of time with a varying reference temperature may end when the cooling medium has circulated at least once through the cooling system since the auxiliary brake was activated.

According to another embodiment of the present invention, the cooling system also has the function of cooling an engine of the vehicle. When a driver operates a brake control in order to cause activation of the auxiliary brake, no driving torque is required from the vehicle's engine, which thus changes over to no-load running. In this situation the engine's cooling requirement is substantially negligible. It is therefore appropriate to use the engine's cooling system for cooling the auxiliary brake. The auxiliary brake may be a hydrodynamic retarder, in which case the cooling system will comprise a heat exchanger for cooling a braking medium of the hydrodynamic retarder. The cooling system's cooling medium then circulates through the heat exchanger, in which it cools the hot braking medium from the retarder. The retarder's braking medium is usually an oil with suitable characteristics.

The object stated above is also achieved with the method mentioned in the introduction which is characterised by what is indicated in the characterising part of claim 11.

### BRIEF DESCRIPTION OF THE DRAWINGS

An embodiment of the invention is described below by way of example with reference to the attached drawings, in which:
- Fig. 1: depicts schematically an arrangement for controlling a retarder according to the present invention,
- Fig. 2a: depicts schematically how the temperature of the coolant leaving the heat exchanger in Fig. 1 varies with time,
- Fig. 2b: depicts schematically how the temperature of the coolant entering the heat exchanger in Fig. 1 varies with time and
- Fig. 2c: depicts schematically how the retarder's braking moment varies with time.

### DETAILED DESCRIPTION OF AN EMBODIMENT OF THE INVENTION

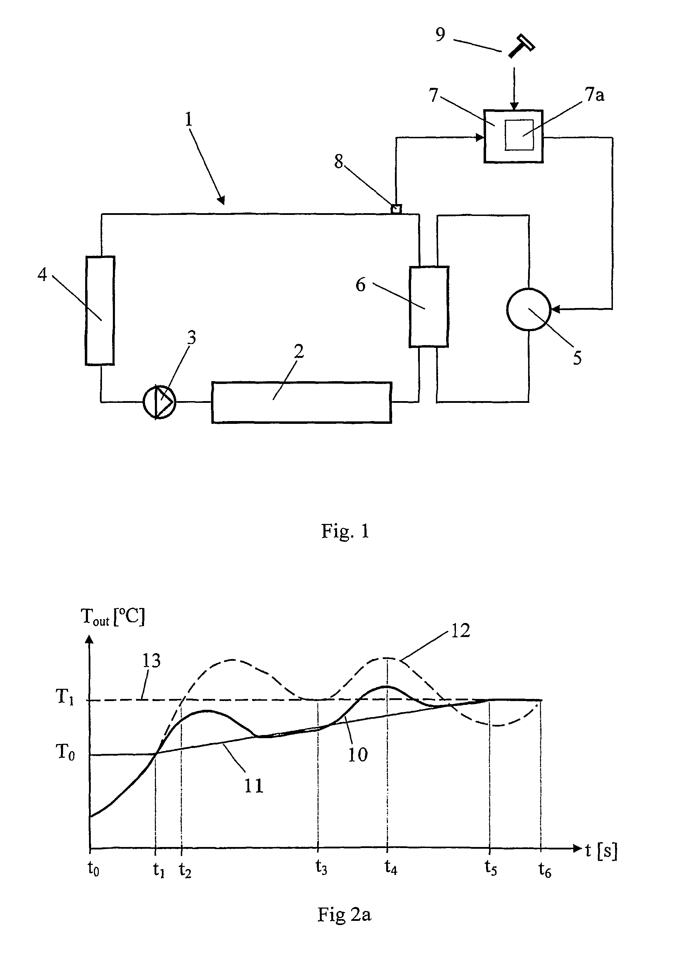

Fig. 1 schematically depicts selected parts of a cooling system 1 in a vehicle for cooling a combustion engine 2 which may be a diesel engine. The cooling system 1 contains a coolant which is circulated in the cooling system by a coolant pump 3. The coolant pump 3 pumps the coolant to the combustion engine 2, in which the coolant is circulated through special ducts in order to cool the engine 2. The cooling system 1 comprises a radiator 4 in which the coolant is intended to give off the thermal energy absorbed from the engine 2. The cooling system 1 is also designed to be used for cooling an auxiliary brake in the form of a hydrodynamic retarder 5. The hydrodynamic retarder 5 comprises in a conventional manner a rotor, a stator and an oil which, when a braking process is activated by the retarder, is adapted to circulate in a toroidal space delineated by the rotor and the stator. The oil then circulates at high velocity between the rotor and the stator before being led out from the toroidal space. The kinetic energy of the oil converts during the braking process to thermal energy. The oil leaving the retarder has to be cooled before it can be used again. The cooling system 1 therefore comprises an extra heat exchanger 6 whereby the coolant of the cooling system 1 cools the hot oil from the retarder 5. The fact that the engine 2 and the retarder 5 are not on load simultaneously makes it possible to use the cooling system for cooling both the engine 2 and the retarder 5.

A control unit 7 is adapted to controlling the activation of the auxiliary brake 5. The control unit 7 may be a computing device provided with software stored on a data carrier 7a. A greater cooling effect is often required for cooling the retarder 5 than for cooling the vehicle's engine 2, but the cooling system 1 is usually dimensioned for cooling the vehicle's engine 2. To avoid overheating of the coolant of the cooling system 1, the control unit 7 is adapted to receiving information about the temperature Tₒᵤₜ of the coolant leaving the heat exchanger 6. The coolant usually reaches its highest temperature in the cooling system after it has cooled the oil in the heat exchanger 6. The control unit 7 is therefore adapted to comparing the temperature value Tₒᵤₜ received from a temperature sensor 8 with a reference temperature T_{ref}, and to controlling activation of the auxiliary brake 5 with a reduced braking effect when temperature values Tₒᵤₜ exceeding the reference temperature T_{ref} are received. A driver initiates braking of the vehicle with the desired braking effect by operating a brake control 9 which may be a brake pedal. The control unit 7 is adapted accordingly to activating the vehicle's brakes with the desired braking effect. The hydrodynamic retarder 5 is one of the vehicle's brakes. The retarder 5 is usually activated primarily to provide the vehicle with a desired braking effect.

An auxiliary brake such as a hydrodynamic retarder 5 often has an impressive braking effect at the beginning of a braking process, but the available braking effect of a retarder 5 is usually limited by the capacity of the cooling system 1 which cools the retarder 5. When the coolant of the cooling system 1 reaches too high a temperature, the control unit 7 has to reduce the braking effect of the retarder 5. In this situation the control unit 7 provides the vehicle with the desired braking effect by activating instead other auxiliary brakes not cooled by the cooling system, or the ordinary wheelbrakes. To enable it to cause activation of the retarder 5 without the cooling system being overloaded, the control unit 7 therefore receives from the temperature sensor 8 measured values of the temperature Tₒᵤₜ of the coolant leaving the heat exchanger 6 after it has cooled the oil. This is when the coolant is usually at its highest temperature. Thereafter the control unit 7 compares the temperature Tₒᵤₜ of the coolant leaving the heat exchanger with a reference temperature T_{ref.} When temperature values Tₒᵤₜ received exceed the reference temperature T_{ref}, the control unit 7 has to reduce the braking effect of the retarder 5.

Figs. 2a-c illustrate how different parameters vary with time during a braking process when the retarder 5 is activated. Fig. 2a has an unbroken curve 10 illustrating how the temperature Tₒᵤₜ of the coolant leaving the heat exchanger 6 varies with time t during the braking process when a form of control according to the present invention is used. In this case a reference temperature T_{ref} which varies with time t is used. The unbroken curve 11 illustrates how the reference temperature T_{ref} varies with time t. During an initial time segment t₀-t₁ after activation of the retarder 5, the reference temperature T_{ref} has a substantially constant temperature value T₀. Thereafter the reference temperature T_{ref} exhibits during the period of time t₁-t₅ a linear rise from the temperature T₀ to a temperature T₁. During a final time segment t₅-t₆ of the braking process, the reference temperature T_{ref} has a substantially constant value in the form of the temperature T₁. The broken curve 12 illustrates how the temperature Tₒᵤₜ of the coolant leaving the heat exchanger 6 varies with time t during a braking process when a conventional form of control is used with a constant reference temperature T_{ref}. In this case a reference temperature which constantly has the temperature value T₁ is used. The constant reference temperature is represented by the broken line 13.

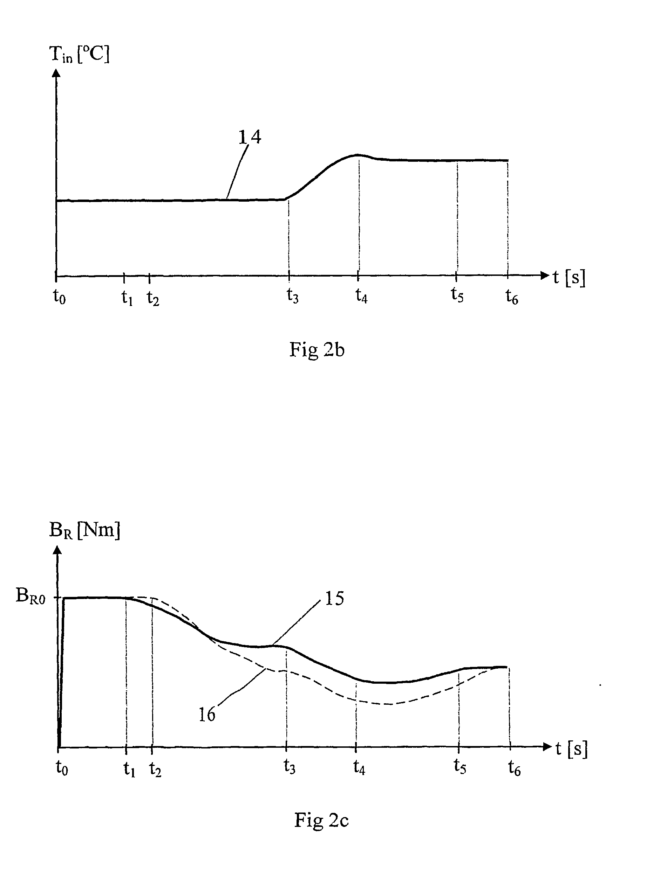

Fig. 2b has a curve 14 illustrating how the temperature Tᵢₙ of the coolant entering the heat exchanger 6 varies with time t during the braking process. When the control unit 7 initially activates the retarder 5, the oil in the retarder provides heat. The coolant present in the heat exchanger 6 is therefore heated by the hot oil coming from the retarder 5. Coolant at a substantially constant temperature Tᵢₙ is led into the heat exchanger 6 until said heated coolant reaches the heat exchanger 6 again after it has circulated once through the cooling system. The initially heated coolant has certainly been cooled in the radiator 4 but is usually still at a higher temperature than the coolant previously circulating through the heat exchanger 6. This heated coolant reaches the heat exchanger 6 at the time t₃ after it has circulated once through the cooling system 1. During the period of time t₃-t_{4,} the coolant being led into the heat exchanger 6 is at a temperature which increases with time. During the period of time t₄-t₆, the temperature Tᵢₙ of the coolant entering the heat exchanger 6 stabilises at a substantially constant value. The sudden increase in the temperature Tᵢₙ of the coolant entering the heat exchanger during the period of time t₃-t₄ also results in a corresponding increase in the temperature Tₒᵤₜ of the coolant leaving the heat exchanger 6, as may be seen with a certain timelag in Fig. 2a.

Fig. 2c has a continuous curve 15 illustrating how the braking effect B_{R} of the retarder 5 varies with time t during the braking process when the control unit 7 applies controlled activation of the retarder 5 on the basis of a reference temperature T_{ref} which varies with time t in accordance with the curve 11. The broken curve 16 shows how the braking effect B_{R} of the retarder 5 varies with time t during the braking process when the control unit 7 applies conventional controlled activation of the retarder 5 on the basis of a constant reference temperature T₁ in accordance with the line 13.

When a driver wishes to brake the vehicle, e.g. on a downhill run, the brake pedal 9 is operated to a position which indicates a desired braking effect of the vehicle. The control unit 7 receives information about the desired braking effect and activates at least the hydrodynamic retarder 5 at the time to in order to provide the vehicle with the desired braking effect B_{R0} during the downhill run. The oil of the retarder 5 therefore begins to heat up and hence give off heat in the heat exchanger 6 to the coolant circulating in the cooling system 1. The coolant leaving the heat exchanger 6 is thus at a gradually increasing temperature Tₒᵤₜ. The control unit 7 receives information substantially continuously from the temperature sensor 8 about the temperature Tₒᵤₜ of the coolant leaving the heat exchanger 6 and compares to see whether the temperature values Tₒᵤₜ received from the temperature sensor 8 exceed the reference temperature T_{ref}.

According to the curve 11, the temperature Tₒᵤₜ of the coolant rises above the reference temperature T_{ref} at the time t₁. The control unit 7 therefore starts reducing the retarder's braking effect B_{R} with the object of bringing the temperature Tₒᵤₜ of the coolant leaving the heat exchanger 6 down to the reference temperature T_{ref}. In this situation, the control unit 7 provides the vehicle with the desired braking effect by activating other auxiliary brakes not cooled by the cooling system, or the vehicle's ordinary wheelbrakes. Such a second auxiliary brake may be an exhaust brake or a compression brake. A form of control according to the present invention thus starts reducing the retarder's braking effect B_{R} at a lower coolant temperature Tₒᵤₜ than in the case of a conventional form of control. A conventional form of control only starts reducing the braking effect B_{R} of the retarder 5 when the temperature Tₒᵤₜ of the coolant leaving the heat exchanger rises above the temperature T₁, which occurs at the time t₂.

After the reduction of the retarder's braking effect B_{R}, the temperature Tₒᵤₜ of the coolant continues to increase for a short time until the reduced braking effect B_{R} of the retarder 5 results in a lowered coolant temperature Tₒᵤₜ. This timelag depends inter alia on the time which the hot oil takes to pass from the retarder 5 to the heat exchanger 6. The fact that according to the present invention the reference temperature T_{ref} increases during the period of time t₁-t₅ means that the temperature Tₒᵤₜ of the coolant need not be lowered as much as when a reference temperature T_{ref} with a constant temperature value is exceeded. Nor therefore need the braking effect B_{R} of the auxiliary brake be reduced as much as in the conventional case. Fig. 2c shows the reduction in the braking effect B_{R} of the retarder according to the curve 15 being initiated earlier but the curve 15 not falling as sharply as the curve 16 which represents the conventional case.

At the time t₃ the coolant has circulated approximately once through the cooling system 1. The coolant entering the heat exchanger 6 will now be at a higher temperature than the coolant previously circulating through the heat exchanger 6 since the activation of the retarder 5. The raised temperature Tᵢₙ of the coolant entering the heat exchanger results in a corresponding raised temperature Tₒᵤₜ of the coolant leaving the heat exchanger 6 despite the retarder 5 not providing any increased braking effect B_{R}. As the temperature Tₒᵤₜ of the coolant leaving the heat exchanger now exceeds the reference temperature T_{ref}, the control unit 7 further reduces the retarder's braking effect. Here again the temperature Tₒᵤₜ of the coolant need not be lowered as much as in the conventional case, since the reference temperature T_{ref} increases during the period of time t₁-t₅. Nor therefore need the retarder's braking effect B_{R} be reduced as much as in the conventional case. Fig. 2c shows the curve 15 according to the present invention not falling as sharply as the conventional curve 16. In this situation, reducing the braking effect of the retarder 5 is unjustified if the retarder's braking effect B_{R} at the time t₃ corresponds to the cooling effect of the radiator 4. The reducing braking effect B_{R} of the retarder 5 results here in it becoming lower than the cooling effect of the radiator 4. Accordingly, particularly in the conventional case, for a period of time, a smaller braking effect B_{R} from the retarder 5 is provided than is optimum with respect to the available cooling capacity of the cooling system. A reference temperature T_{ref} which increases with time results in a smaller reduction in the retarder's braking effect B_{R} than in the conventional case. The degree to which the present invention reduces the retarder's braking effect less than in the conventional case depends on how well the reference temperature T_{ref} is adapted after the temperature rise which the coolant exhibits after it has circulated once through the cooling system 1.

All the process steps, and any desired partial sequences of steps, described above can of course be controlled by a computer programme which is directly loadable to the internal memory of a computer and comprises suitable software for controlling the necessary steps when the programme is run on the computer. In addition, even if the embodiment of the invention described with reference to the drawings is software-controlled by a computer and processes performed by computer, the invention extends also to computer programmes, particularly such computer programmes stored on a data carrier adapted to utilising the invention. The programme may be in the form of source code, object code, a code which takes the form of a level between source code and object code (e.g. in partly compiled form) or in whatever other form may be suitable for use in implementing the method according to the invention. The data carrier may be any desired entity or device capable of storing the programme, e.g. the data carrier may comprise a storage medium such as ROM (Read Only Memory), PROM (Programmable Read-Only Memory), EPROM (Erasable PROM), Flash or EEPROM (Electrically EPROM). The data carrier may also take the form of a transferable carrier, such as an electrical or optical signal capable of being transferred via an electric or optical cable or by radio or by some other means. If the programme is comprised in a signal which can be led directly through a cable or some other device or means, the data carrier may take the form of such a cable, device or equipment. Alternatively, the data carrier may be an integrated circuit in which the programme is stored, whereby the integrated circuit is adapted to performing, or being used in the performance of, relevant processes.

The invention is in no way limited to the embodiment described but may be varied freely within the scopes of the claims. The reference temperature T_{ref} may exhibit substantially any desired but functional variation with time during the period of time when coolant at a raised temperature is led into the heat exchanger. In many cases it will be appropriate to use the engine's cooling system for cooling the auxiliary brake, but it is also possible for the auxiliary brake to be cooled by a separate cooling system.

## Claims

1. An arrangement for controlling the activation of an auxiliary brake of a vehicle, wherein the arrangement comprises the auxiliary brake (5), a cooling system (1) with a circulating cooling medium adapted to cooling the auxiliary brake (5), a temperature sensor (8) adapted to detecting the temperature (Tₒᵤₜ) of the cooling medium after the latter has cooled the auxiliary brake (5), and a control unit (7) adapted to comparing temperature values (Tₒᵤₜ) received from the temperature sensor (8) with a reference temperature (T_{ref}) and to controlling the activation of the auxiliary brake (5) with a reduced braking effect when temperature values (Tₒᵤₜ) received exceed the reference temperature (T_{ref}), and to comparing the temperature (Tₒᵤₜ) of the cooling medium after it has cooled the auxiliary brake (5) with a reference temperature (T_{ref}) which varies with time during at least one period of time (t₁-t₅) of the activation time of the auxiliary brake (5), **characterised in that** the period of time (t₁-t₅) with a varying reference temperature (T_{ref}) ends at a time (t₅) when the cooling medium has circulated at least once through the cooling system (1) since the auxiliary brake (5) was activated and that the reference temperature (T_{ref}) has a substantially constant temperature value (T₁) during the time segment (t₅-t₆) which follows the period of time (t₁-t₅) with the varying reference temperature (T_{ref}).

2. An arrangement according to the foregoing claim, **characterised in that** the reference temperature (T_{ref}) increases continuously with time within said period of time (t₁-t₅).

3. An arrangement according to claim 2, **characterised in that** the reference temperature (T_{ref}) increases in a substantially linear manner within said period of time (t₁-t₅).

4. An arrangement according to any one of the foregoing claims, **characterised in that** the reference temperature (T_{ref}) exhibits, within said period of time (t₁-t₅), a variation with time which comprises a rise corresponding to the expected rise in the temperature (Tₒᵤₜ) of the cooling medium which occurs when the cooling medium has circulated approximately once through the cooling system (1) since the auxiliary brake (5) was activated.

5. An arrangement according to any one of the foregoing claims, **characterised in that** the reference temperature (T_{ref}) exhibits a substantially constant temperature value (T₀) during an initial time segment (t₀-t₁) after activation of the auxiliary brake (5).

6. An arrangement according to claim 5, **characterised in that** said period of time (t₁-t₅) with a varying reference temperature (T_{ref}) commences at a time (t₁) when the temperature (Tₒᵤₜ) of the cooling medium first rises above the reference temperature (T_{ref}) after activation of the auxiliary brake (5).

7. An arrangement according to any one of the foregoing claims, **characterised in that** the cooling system (1) also has the function of cooling an engine (2) of the vehicle.

8. An arrangement according to any one of the foregoing claims, **characterised in that** the first auxiliary brake is a hydrodynamic retarder (5) and the cooling system (1) comprises a heat exchanger (6) for cooling a braking medium which is used by the hydrodynamic retarder (5).

9. A method for controlling the activation of an auxiliary brake of a vehicle, whereby the vehicle comprises the auxiliary brake (5), a cooling system (1) with a circulating cooling medium adapted to cooling the auxiliary brake (5), and a temperature sensor (8) adapted to detecting the temperature (Tₒᵤₜ) of the cooling medium after the latter has cooled the auxiliary brake (5), wherein the method comprises the steps of comparing temperature values (Tₒᵤₜ) received from the temperature sensor (8) with a reference temperature (T_{ref}),
controlling the activation of the auxiliary brake (5) with a reduced braking effect when temperature values (Tₒᵤₜ) received exceed the reference temperature (T_{ref}), and comparing the temperature (Tₒᵤₜ) of the cooling medium after it has cooled the auxiliary brake (5) with a reference temperature (T_{ref}) which varies with time during at least one period of time (t₁-t₅) of the activation time of the auxiliary brake (5), and **characterised by** the steps of
ending the period of time (t₁-t₅) with a varying reference temperature (T_{ref}) at a time (t₅) when the cooling medium has circulated at least once through the cooling system since the auxiliary brake was activated, and
comparing the temperature (Tₒᵤₜ) of the cooling medium with a reference temperature (T_{ref}) which has a substantially constant temperature value (T₁) during the time segment (t₅-t₆) which follows the period of time (t₁-t₅) with the varying reference temperature (T_{ref}).

10. A method according to claim 9, **characterised by** the step of comparing the temperature (Tₒᵤₜ) of the cooling medium with a reference temperature (T_{ref}) which increases continuously with time within said time segment (t₁-t₅).

11. A method according to claim 10, **characterised by** the step of comparing the temperature (Tₒᵤₜ) of the cooling medium with a reference temperature (T_{ref}) which increases in a substantially linear manner with time within said time segment (t₁-t₅).

12. A method according to any one of claims 9-11 above, **characterised by** the step of comparing the temperature (Tₒᵤₜ) of the cooling medium with a reference temperature (T_{ref}) which exhibits, within said period of time (t₁-t₅), a variation with time which comprises a rise corresponding to the expected rise in the temperature (Tₒᵤₜ) of the cooling medium which occurs when the cooling medium has circulated approximately once through the cooling system (1) since the auxiliary brake (5) was activated.

13. A method according to any one of claims 9-12 above, charactetised by the step of comparing the temperature (Tₒᵤₜ) of the cooling medium with a reference temperature (T_{ref}) which has a substantially constant temperature value (T_{ref0}) during an initial time segment (t₀-t₁) after activation of the auxiliary brake (5).

14. A method according to claim 13, **characterised by** the step of commencing said period of time (t₁-t₅) with a varying reference temperature (T_{ref}) at a time (t₁) when the temperature (Tₒᵤₜ) of the cooling medium first rises above the reference temperature (T_{ref}) after activation of the auxiliary brake (5).

15. A method according to any one of claims 9 to 14, **characterised by** the step of also using said cooling system (1) for cooling an engine (2) of the vehicle.

16. A method according to any one of claims 9 to 15, **characterised by** the step of using a heat exchanger (6) of the cooling system (1) to cool a braking medium which is used by the auxiliary brake (5).

17. A computer programme loadable directly to the internal memory of a computer and comprising software for controlling the method according to any one of claims 9 - 16 when the programme is run on a computer.

18. A computer-readable medium (7a) on which is stored a programme which is suitable for enabling a computer to control the method according to any one of claims 9 - 16.

## Patentansprüche

1. Vorrichtung zum Steuern der Aktivierung einer Hilfsbremse eines Fahrzeugs, wobei die Vorrichtung umfasst: die Hilfsbremse (5), ein Kühlsystem (1) mit einem zirkulierenden Kühlmedium, das dazu ausgebildet ist, die Hilfsbremse (5) zu kühlen, einen Temperatursensor (8), der dazu ausgebildet ist, die Temperatur (Tₒᵤₜ) des Kühlmediums zu erfassen, nachdem dieses die Hilfsbremse (5) gekühlt hat, und eine Steuereinheit (7), die dazu ausgebildet ist, die Temperaturwerte (Tₒᵤₜ), die vom Temperatursensor (8) erhalten wurden, mit einer Bezugstemperatur (T_{ref}) zu vergleichen und die Aktivierung der Hilfsbremse (5) mit reduzierter Bremswirkung zu steuern, wenn die empfangenen Temperaturwerte (Tₒᵤₜ) die Bezugstemperatur (T_{ref}) übersteigen, und die Temperatur (Tₒᵤₜ) des Kühlmediums, nachdem es die Hilfsbremse (5) gekühlt hat, mit einer Bezugstemperatur (T_{ref}) zu vergleichen, die mit der Zeit während zumindest einer Zeitperiode (t₁-t₅) der Aktivierungszeit der Hilfsbremse (5) schwankt,
**dadurch gekennzeichnet, dass** die Zeitperiode (t₁-t₅) mit einer variierenden Bezugstemperatur (T_{ref}) an einem Zeitpunkt (t₅) endet, wenn das Kühlmedium zumindest einmal durch das Kühlsystem (1) zirkuliert ist, seit die Hilfsbremse (5) aktiviert wurde, und dass die Referenztemperatur (T_{ref}) im Wesentlichen einen konstanten Temperaturwert (T₁) während des Zeitabschnitts (t₅-t₆) hat, der auf die Zeitperiode (t₁-t₅) mit variierender Bezugstemperatur (T_{ref}) folgt.

2. Vorrichtung nach einem der vorangehenden Ansprüche,
**dadurch gekennzeichnet, dass** die Bezugstemperatur (T_{ref}) kontinuierlich mit der Zeit innerhalb der Zeitperiode (t₁-t₅) ansteigt.

3. Vorrichtung nach Anspruch 2,
**dadurch gekennzeichnet, dass** die Bezugstemperatur (T_{ref}) in einer im Wesentlichen linearen Weise innerhalb der Zeitperiode (t₁-t₅) ansteigt.

4. Vorrichtung nach einem der vorangehenden Ansprüche,
**dadurch gekennzeichnet, dass** die Bezugstemperatur (T_{ref}) innerhalb der Zeitperiode (t₁-t₅) eine Schwankung bezüglich der Zeit aufweist, die einen Anstieg entsprechend dem erwarteten Temperaturanstieg (Tₒᵤₜ) des Kühlmediums umfasst, der dann auftritt, wenn das Kühlmedium seit der Aktivierung der Hilfsbremse (5) etwa einmal durch das Kühlsystem (1) zirkuliert ist.

5. Vorrichtung nach einem der vorangehenden Ansprüche,
**dadurch gekennzeichnet, dass** die Bezugstemperatur (T_{ref}) einen im Wesentlichen konstanten Temperaturwert (T₀) während eines anfänglichen Zeitsegments (t₀-t₁) nach der Aktivierung der Hilfsbremse (5) hat.

6. Vorrichtung nach Anspruch 5,
**dadurch gekennzeichnet, dass** die Zeitperiode (t₁-t₅) mit einer variierenden Bezugstemperatur (T_{ref}) zu einem Zeitpunkt (t₁) beginnt, wenn die Temperatur (Tₒᵤₜ) des Kühlmediums zunächst über die Bezugstemperatur (T_{ref}) nach der Aktivierung der Hilfsbremse (5) ansteigt.

7. Vorrichtung nach einem der vorangehenden Ansprüche,
**dadurch gekennzeichnet, dass** das Kühlsystem (1) ferner die Funktion der Kühlung eines Motors (2) des Fahrzeugs aufweist.

8. Vorrichtung nach einem der vorangehenden Ansprüche,
**dadurch gekennzeichnet, dass** die erste Hilfsbremse ein hydrodynamischer Retarder (5) ist, und dass das Kühlsystem (1) einen Wärmetauscher (6) zum Kühlen eines Bremsmediums umfasst, das in dem hydrodynamischen Retarder (5) eingesetzt wird.

9. Verfahren zum Steuern der Aktivierung einer Hilfsbremse eines Fahrzeugs, wobei das Fahrzeug eine Hilfsbremse (5), ein Kühlsystem (1) mit einem zirkulierenden Kühlmedium, das zum Kühlen der Hilfsbremse (5) vorgesehen ist, und einen Temperatursensor (8) umfasst, der dazu ausgelegt ist, die Temperatur (Tₒᵤₜ) des Kühlmediums zu erfassen, nachdem dieses die Hilfsbremse (5) gekühlt hat, wobei das Verfahren die Schritte umfasst:
Vergleichen der von dem Temperatursensor (8) erhaltenen Temperaturwerte (Tₒᵤₜ) mit einer Bezugstemperatur (T_{ref}),
Steuern der Aktivierung der Hilfsbremse (5) mit einem reduzierten Bremseffekt, wenn die empfangenen Temperaturwerte (Tₒᵤₜ) die Bezugstemperatur (T_{ref}) übersteigen, und
Vergleichen der Temperatur (Tₒᵤₜ) des Kühlmediums, nachdem es die Hilfsbremse (5) gekühlt hat, mit einer Bezugstemperatur (T_{ref}), die über die Zeit während wenigstens einer Zeitperiode (t₁-t₅) der Aktivierungszeit der Hilfsbremse (5) schwankt, und
**gekennzeichnet durch** die Schritte:
Beenden der Zeitperiode (t₁-t₅) mit variierender Bezugstemperatur (T_{ref}) zu einem Zeitpunkt (t₅), wenn das Kühlmedium wenigstens einmal **durch** das Kühlsystem zirkuliert ist, seit die Hilfsbremse aktiviert wurde, und
Vergleichen der Temperatur (Tₒᵤₜ) des Kühlmediums mit einer Bezugstemperatur (T_{ref}), die einen im Wesentlichen konstanten Temperaturwert (T₁) während des Zeitabschnitts (t₅-t₆) aufweist, der auf die Zeitperiode (t₁-t₅) mit variierender Bezugstemperatur (T_{ref}) folgt.

10. Verfahren nach Anspruch 9,
**gekennzeichnet durch** den Schritt des Vergleichens der Temperatur (Tₒᵤₜ) des Kühlmediums mit einer Bezugstemperatur (T_{ref}), die kontinuierlich mit der Zeit innerhalb des Zeitabschnitts (t₁-t₅) zunimmt.

11. Verfahren nach Anspruch 10,
**gekennzeichnet durch** den Schritt des Vergleichens der Temperatur (Tₒᵤₜ) des Kühlmediums mit einer Bezugstemperatur (T_{ref}), die in im Wesentlichen linearer Weise über die Zeit innerhalb des Zeitabschnitts (t₁-t₅) zunimmt.

12. Verfahren nach einem der Ansprüche 9 bis 11,
**gekennzeichnet durch** den Schritt des Vergleichens der Temperatur (Tₒᵤₜ) des Kühlmediums mit einer Bezugstemperatur (T_{ref}), die innerhalb der Zeitperiode (t₁-t₅) über die Zeit eine Schwankung zeigt, die einen Anstieg entsprechend dem erwarteten Temperaturanstieg (Tₒᵤₜ) des Kühlmediums umfasst, der dann auftritt, wenn das Kühlmedium ungefähr einmal **durch** das Kühlsystem (1) zirkuliert ist, seit die Hilfsbremse (5) aktiviert wurde.

13. Verfahren nach einem der Ansprüche 9 bis 12,
**gekennzeichnet durch** den Schritt des Vergleichens der Temperatur (Tₒᵤₜ) des Kühlmediums mit einer Bezugstemperatur (T_{ref}), die einen im Wesentlichen konstanten Temperaturwert (T_{ref}) während eines Anfangszeitabschnitts (t₀-t₁) nach der Aktivierung der Hilfsbremse (5) umfasst.

14. Verfahren nach Anspruch 13,
**gekennzeichnet durch** den Schritt des Beginnens der Zeitperiode (t₁-t₅) mit einer variierenden Bezugstemperatur (T_{ref}) zu einem Zeitpunkt (t₁), wenn die Temperatur (Tₒᵤₜ) des Kühlmediums zunächst auf einen Wert oberhalb der Bezugstemperatur (T_{ref}) nach der Aktivierung der Hilfsbremse (5) ansteigt.

15. Verfahren nach einem der Ansprüche 9 bis 14,
**gekennzeichnet durch** den Schritt des Verwendens des Kühlsystems (1) auch zum Kühlen eines Motors (2) des Fahrzeugs.

16. Verfahren nach einem der Ansprüche 9 bis 15,
**gekennzeichnet durch** den Schritt des Verwendens eines Wärmetauschers (6) des Kühlsystems (1) zum Kühlen eines Bremsmediums, das von der Hilfsbremse (5) verwendet wird.

17. Computerprogramm, das direkt in den internen Speicher eines Computers ladbar ist und eine Software aufweist, um das Verfahren gemäß einem der Ansprüche 9 bis 16 zu steuern, wenn das Programm auf einem Computer ausgeführt wird.

18. Computerlesbares Medium (7a), auf dem ein Programm gespeichert ist, das zum Veranlassen eines Computers zum Steuern des Verfahrens nach einem der Ansprüche 9 bis 16 geeignet ist.

## Revendications

1. Agencement permettant de commander l'activation d'un frein auxiliaire d'un véhicule, l'agencement comprenant le frein auxiliaire (5), un système de refroidissement (1) avec un milieu de refroidissement circulant conçu pour refroidir le frein auxiliaire (5), un capteur de température (8) conçu pour détecter la température (Tₒᵤₜ) du milieu de refroidissement après que celui-ci a refroidi le frein auxiliaire (5), et une unité de commande (7) conçue pour comparer les valeurs de température (Tₒᵤₜ) reçues du détecteur de température (8) à une température de référence (T_{ref}) et pour commander l'activation du frein auxiliaire (5) avec un effet de freinage réduit lorsque les valeurs de température (Tₒᵤₜ) reçues sont supérieures à la température de référence (T_{ref}), et pour comparer la température (Tₒᵤₜ) du milieu de refroidissement après qu'il a refroidi le frein auxiliaire (5) à une température de référence (T_{ref}) qui varie au cours du temps pendant au moins une période (t₁-t₅) du temps d'activation du frein auxiliaire (5), **caractérisé en ce que** la période (t₁-t₅) présentant une température de référence variable (T_{ref}) s'achève à un instant (t₅) où le milieu de refroidissement a circulé au moins une fois à travers le système de refroidissement (1) depuis que le frein auxiliaire (5) a été activé et **en ce que** la température de référence (t_{ref}) a une valeur de température sensiblement constante (T₁) pendant le segment de temps (t₅-t₆) qui suit la période (t₁-t₅) présentant la température de référence variable (T_{ref}).

2. Agencement selon la revendication précédente, **caractérisé en ce que** la température de référence (T_{ref}) augmente de façon continue au cours du temps pendant ladite période de temps (t₁-t₅).

3. Agencement selon la revendication 2, **caractérisé en ce que** la température de référence (T_{ref}) augmente de façon sensiblement linéaire pendant ladite période de temps (t₁-t₅).

4. Agencement selon l'une quelconque des revendications précédentes, **caractérisé en ce que** la température de référence (T_{ref}) présente, pendant ladite période (t1-t5), une variation au cours du temps comprenant une augmentation correspondant à l'augmentation attendue de la température (Tout) du milieu de refroidissement qui se produit lorsque le milieu de refroidissement a circulé environ une fois à travers le système de refroidissement (1) depuis que le frein auxiliaire (5) a été activé.

5. Agencement selon l'une quelconque des revendications précédentes, **caractérisé en ce que** la température de référence (T_{ref}) présente une valeur de température (T₀) sensiblement constante pendant un segment de temps initial (t₀-t₁) après l'activation du frein auxiliaire (5).

6. Agencement selon la revendication 5, **caractérisé en ce que** ladite période (t₁-t₅) présentant une température de référence variable (T_{ref}) commence à l'instant (t₁) où la température (Tₒᵤₜ) du milieu de refroidissement s'élève pour la première fois au-dessus de la température de référence (T_{ref}) après l'activation du frein auxiliaire (5).

7. Agencement selon l'une quelconque des revendications précédentes, **caractérisé en ce que** le système de refroidissement (1) a également pour fonction de refroidir un moteur (2) du véhicule.

8. Agencement selon l'une quelconque des revendications précédentes, **caractérisé en ce que** le premier frein auxiliaire est un ralentisseur hydrodynamique (5) et le système de refroidissement (1) comprend un échangeur thermique (6) destiné à refroidir un milieu de freinage qui est utilisé par le ralentisseur hydrodynamique (5).

9. Procédé permettant de commander l'activation d'un frein auxiliaire d'un véhicule, moyennant quoi le véhicule comprend le frein auxiliaire (5), un système de refroidissement (1) avec un milieu de refroidissement circulant conçu pour refroidir le frein auxiliaire (5), et un capteur de température (8) conçu pour détecter la température (Tₒᵤₜ) du milieu de refroidissement après que celui-ci a refroidi le frein auxiliaire (5), dans lequel le procédé comprend les étapes consistant à comparer les valeurs de température (Tₒᵤₜ) reçues du détecteur de température (8) à une température de référence (T_{ref}), à commander l'activation du frein auxiliaire (5) avec un effet de freinage réduit lorsque les valeurs de température (Tₒᵤₜ) reçues sont supérieures à la température de référence (T_{ref}), et à comparer la température (Tₒᵤₜ) du milieu de refroidissement après qu'il a refroidi le frein auxiliaire (5) à une température de référence (T_{ref}) qui varie au cours du temps pendant au moins une période (t₁-t₅) du temps d'activation du frein auxiliaire (5), et **caractérisé par** les étapes consistant à faire achever la période (t₁-t₅) présentant une température de référence variable (T_{ref}) à un instant (t₅) où le milieu de refroidissement a circulé au moins une fois à travers le système de refroidissement depuis que le frein auxiliaire a été activé, et à comparer la température (Tₒᵤₜ) du milieu de refroidissement à une température de référence (T_{ref}) ayant une valeur de température sensiblement constante (T₁) pendant le segment de temps (t₅-t₆) qui suit la période (t₁-t₅) présentant la température de référence variable (T_{ref}).

10. Procédé selon la revendication 9, **caractérisé par** l'étape consistant à comparer la température (Tₒᵤₜ) du milieu de refroidissement à une température de référence (T_{ref}) qui augmente de façon continue au cours du temps pendant ledit segment de temps (t₁-t₅).

11. Procédé selon la revendication 10, **caractérisé par** l'étape consistant à comparer la température (Tₒᵤₜ) du milieu de refroidissement à une température de référence (T_{ref}) qui augmente de façon sensiblement linéaire pendant ledit segment de temps (t₁-t₅).

12. Procédé selon l'une quelconque des revendications 9 à 11 précédentes, **caractérisé par** l'étape consistant à comparer la température (Tₒᵤₜ) du milieu de refroidissement à une température de référence (T_{ref}) présentant, pendant ladite période (t1-t5), une variation au cours du temps comprenant une augmentation correspondant à l'augmentation attendue de la température (Tₒᵤₜ) du milieu de refroidissement qui se produit lorsque le milieu de refroidissement a circulé environ une fois à travers le système de refroidissement (1) depuis que le frein auxiliaire (5) a été activé.

13. Procédé selon l'une quelconque des revendications 9 à 12 précédentes, **caractérisé par** l'étape consistant à comparer la température (Tₒᵤₜ) du milieu de refroidissement à une température de référence (T_{ref}) présentant une valeur de température (T_{ref0}) sensiblement constante pendant un segment de temps initial (t₀-t₁) après l'activation du frein auxiliaire (5).

14. Procédé selon la revendication 13, **caractérisé par** l'étape consistant à faire commencer ladite période (t₁-t₅) présentant une température de référence variable (T_{ref}) à un instant (t₁) où la température (Tₒᵤₜ) du milieu de refroidissement s'élève pour la première fois au-dessus de la température de référence (T_{ref}) après l'activation du frein auxiliaire (5).

15. Procédé selon l'une quelconque des revendications 9 à 14 précédentes, **caractérisé par** l'étape consistant à également utiliser ledit système de refroidissement (1) pour refroidir un moteur (2) du véhicule.

16. Procédé selon l'une quelconque des revendications 9 à 15, **caractérisé par** l'étape consistant à utiliser un échangeur thermique (6) du système de refroidissement (1) pour refroidir un milieu de freinage qui est utilisé par le frein auxiliaire (5).

17. Programme informatique pouvant être chargé directement dans la mémoire interne d'un ordinateur et comprenant un logiciel pour commander le procédé selon l'une quelconque des revendications 9 à 16 lorsque le programme est exécuté sur un ordinateur.

18. Support exploitable sur ordinateur (7a) sur lequel est mémorisé un programme conçu pour permettre à un ordinateur de commander le procédé selon l'une quelconque des revendications 9 à 16.
